# EUROPEAN PATENT SPECIFICATION

(11) **EP 1 426 159 B1**
(45) Date of publication and mention of the grant of the patent: **28.08.2013**
(21) Application number: 02765456.5
(22) Date of filing: 09.09.2002
(51) Int. Cl.: B29C 45/14, B29C 45/26, B65B 61/18, B29D 22/00

(54) **METHOD OF MOLDING PLASTIC PART TO CONTAINER MADE OF FLEXIBLE WEB MATERIAL, A DEVICE THEREFOR, AND CONTAINER HAVING PLASTIC PART MOLDED THERETO**
VERFAHREN ZUM ANFORMEN EINES KUNSTSTOFFTEILS AN EINEN AUS FLEXIBLEM BAHNFÖRMIGEN MATERIAL HERGESTELLTEN BEHÄLTER, VORRICHTUNG DAFÜR UND BEHÄLTER MIT DARAN ANGEFORMTEM KUNSTSTOFFTEIL
PROCEDE DE MOULAGE DE PIECE EN PLASTIQUE SUR UN CONTENANT EN MATERIAU TISSE FLEXIBLE, DISPOSITIF CORRESPONDANT, ET CONTENANT SUR LEQUEL EST MOULEE UNE PIECE EN PLASTIQUE

(30) Priority: 12.09.2001 JP 2001275914
(43) Date of publication of application: 09.06.2004
(73) Proprietor: Tetra Laval Holdings & Finance S.A., 1009 Pully (CH)
(72) Inventor: BENGTSSON, Ulf, c/o NIHON TETRA PAK K.K., Tokyo 102-8544 (JP)
(74) Representative: Müller Schupfner & Partner
(86) International application number: PCT/JP2002/009160
(87) International publication number: WO 2003/024689

(56) References cited:
- EP-A1- 0 650 895
- EP-A1- 1 016 592
- EP-A2- 0 279 486
- JP-A- 2 098 537
- JP-A- 11 091 000
- JP-A- 11 152 125
- JP-A- 54 145 758
- JP-A- 60 154 021
- JP-A- 60 158 003
- JP-A- 62 211 117
- JP-A- 2000 168 770
- JP-A- 2000 203 506
- JP-A- 2000 203 507
- JP-A- 2000 233 426
- US-A- 4 604 850

## Description

### TECHNICAL FIELD

This invention relates to a method for applying plastic part in a container to with complicated flaps comprising of a ftexible web material by a injection molding apparatus having molds and nozzles, a mould equipment and a container obtained by the method or the equipment.

### BACKGROND ART

it is well known for the packaging container field to apply particularly plastic part of an opening device such as a cover, a tap, a cap on a container and a packaging.

A method of applying plastic part includes forming plastic part by extrusion molding or injection molding to molds (metal molds) in advance and, applying the plastic part with heat-sealing/ adhesive on the packaging container.

There is a method of molding directly plastic part to an opening top edge, simple container side walls, a top of a cup-shaped container comprising of, for example, the flexible web materials. However, the use is limited.

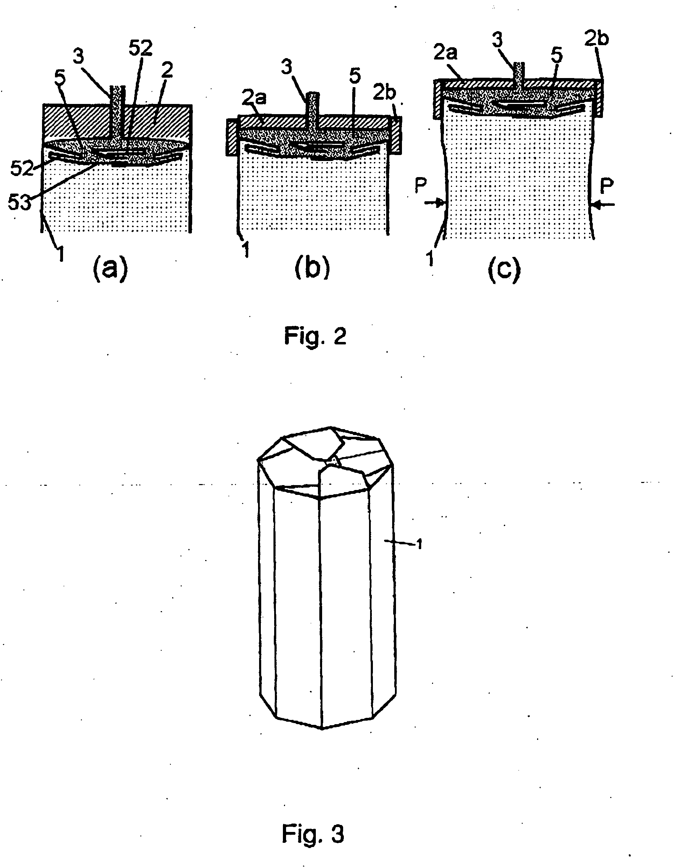

A container obtained by forming tube flexible web material, filling of liquid food, transversal sealing of the tube material and cutting, folding folded flaps to the container top and, forming of final shape includes a container 1 with the octagon prism shape as shown in Fig. 3.

EP 0 279 486 A2 discloses a sealed beverage container comprising: a rectangular parallelepipeded main body made of paper-base laminate and having a top wall, a bottom wall and a trunk wall and upper and lower cap-like reinforcing covers.

EP 0 650 895 A1 discloses a packaging container for beverages as well as blanks for producing packaging containers, which are often manufactured from paper-plastic laminate, which, by fold forming and is given the desired container configuration, normally parallelepipedic.

FR 120 0 522 and EP 453 573 A1 each disclos a Mould apparatus of moulding plastic part to a container comprising of flexible web material comprises;
a transporting means for transporting, to a moulding portion,
a nozzle for injecting the fusion thermoplastic material,
a mold for forming a cavity by applying to the container top and having a passage connecting the nozzle outlet with the cavity interior,
a cooling means cooling thermoplastic material injected in the cavity of the mold and,
a drive means for moving the nozzle and the mold for applying to the container top and the mold and detaching of the mold from the container top.

In these documents, the container is obtained by filling contents to a tubular container body, closing it with a lid, and joining the tubular container body and the lid by injection moulding.

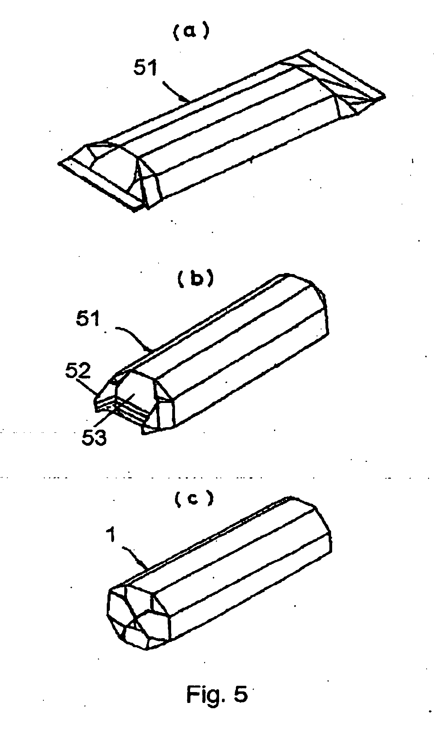

In manufacture of the folded container having the folded flaps to the container top, a primary container 51 is obtained by cutting of sealed tube-like material along a crease line. (Fig. 5 (a)) Final container 1 with octagonal pillar shape is obtained by triple foldings (Fig. 5 (b)) to container top 53 of folding flaps 52 (Fig. 5 (c)).

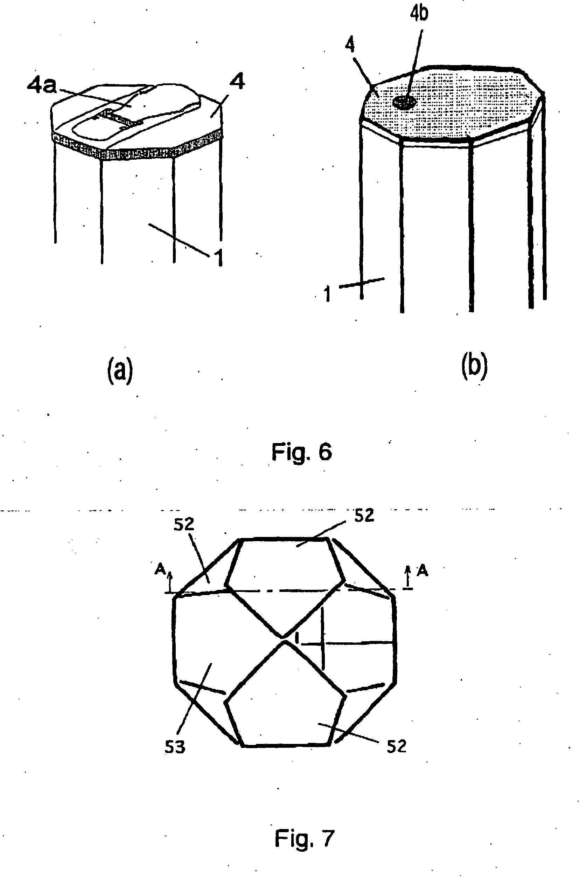

For example, in the container as shown in Fig. 7, the folded flaps 52 are complicatedly folded on the container top wall 53. There are a gap between folded flaps and container top wall, a gap between folded flaps and the other folded flaps and steps between container top walls, steps between folded flaps. The container does not have simple design. When the plastic parts of cover and etc are applied to the container top wall, design of the plastic parts and the container may be limited.

In the container having complicatedly folded flaps, the flaps are folded by using flexible web materials with crease lines, along the crease lines. Further manufacturing process and the energy, material, equipment are necessary with adhesive or heat sealing, in order to fix folded flaps to the container top wall.

In the container having the flaps complicatedly folded on the container top wall, there are a gap between folded flaps and container top wall, a gap between folded flaps and the other folded flaps and steps between container top wall, steps between folded flaps. Dust, garbage, dust, small Insect might stick into them, in delivering stages of the container and the produce including contents.

### Disclosure of Invention

A purpose of this invention is to provide with a method of applying plastic part, an apparatus and a container, in which simple designs and free designs of the container or the plastic parts can be arranged in the container having complicatedly folded flaps to container top wall and having gaps and steps on the container top wall.

The second purpose of this invention is to provide with a method of applying plastic part, an apparatus and a container, in which, for fixing folded flaps onto the container top wall, further manufacturing step of the adhesive or heat-seal, the energy, the material, the equipment are not needed in the container having complicatedly folded flaps to container top wall and having gaps and steps on the container top wall.

The purpose of this invention is to provide with a method of applying plastic part, the apparatus thereof and a container, in which the gaps and steps of the container top can be deleted and, in a delivering stage of containers and products including contents, they will not be contaminated by dust, garbage, dusts, small insects in the container having complicatedly folded flaps to container top wall and having gaps and steps on the container top wall.

A mould method of this invention solving an above problem comprising moulding plastic part onto a top of a container obtained by; forming a flexible web material with crease lines into tube shape, filling contents to the tube web material, traverse-sealing and cutting the tube web material, folding a primary container obtained by the cutting along crease lines, forming a finally shaped container with multi-folding of the folded flap onto the container top characterized by including the following step:
a step of forming a cavity between an inner wall of a mold of an injection molding apparatus having a nozzle and the top by applying a mold of an injection molding apparatus to the container top,
a step of injecting at least the fusion thermoplastic material to the inner wall face of the mold and gaps between the folded flaps and the stop surface, by injection of fusion thermoplastic material from the nozzle to the cavity,
a step of cooling the injected thermoplastic material immediately,
a step of forming the plastic part to the top of the container by detaching the mold of the injection molding apparatus from the container top.

In preferable embodiment of the mould method of this invention, the shape of the container with the final shape is substantially in an octagonal prism pillar shape.

In preferable embodiment of the mould method of this invention, the container top is upturned and the mold of the injection molding equipment is applied on the container top.

In preferable embodiment of the mould method of this invention, the container tip is down-turned and the mold of the injection molding equipment is applied.
on the container top.

In preferable embodiment of the mould method of this invention, the cavity between the mold and the container top is sealed by pressure from the side wall of the contents-filled container in the application with the mold of the injection molding apparatus and the container top.

In preferable embodiment of the method of this invention, the mold consists of single member.

In preferable embodiment of the method of this invention, the mold consists of plural members.

Mould apparatus of plastic part to a container comprising of flexible web materials by this invention comprises;
a transporting means transporting, to a moulding potion, a container obtained by;
forming a flexible web material with crease lines into tube shape, filling contents to the tube web material, traverse-sealing and cutting the tube web material, folding a primary container obtained by the cutting along crease lines, forming a final shape container with multi-folding of the folded flap onto the container top, forming a finally shaped container with multi-folding of the folded flap onto the container top,
a nozzle injecting fusion thermoplastic material,
a mold forming a cavity by applying to the container top and having a passage connecting the nozzle outlet with the cavity interior,
a cooling means cooling thermoplastic material injected in the cavity of the mold and,
a drive means moving the nozzle and the mold for applying to the container top and the mold and detaching of the mold from the container top.

In preferable embodiment of the mould apparatus of this invention, an inner wall face of the mold is downwardly arranged and, a top of the container transported upwardly is applied with the mold.

In preferable embodiment of the mould apparatus of this invention, an inner wall face of the mold is upwardly arranged and, a top of the container transported downwardly is applied with the mold.

### Brief Description of Drawings

Fig. 1 is a sketch drawing showing brief of mould method by this invention.
Fig. 2 is a sectional view showing details of other embodiment of the method by this invention.
Fig. 3 is a perspective view showing appearance of an octagonal pillar container with complicatedly folded flaps used for this invention.
Fig. 4 is a perspective view showing internal structure of packaging filler making a container with complicatedly folded flaps used for this invention.
Fig. 5 is a respectively sectional view showing an octagonal pillar container with complicatedly folded flaps used for this invention.
Fig. 6 is a perspective view showing brief of the packaging container of this invention.
Fig. 7 is a plan view showing a top of an octagonal pillar container with complicatedly folded flaps used for this invention.
Fig. 8 is a sectional view showing the details of the other embodiment of the mould method of this invention.
Fig. 9 is a section view of mould apparatus in accordance with this invention.
Fig. 10 is a section view showing the details of the other embodiment according to the mould method of this invention.

### Best Mode To Carry Out Invention

The container having a moulded plastic part of this invention includes the container obtained by
forming a flexible web material with crease lines into tube shape,
filling contents to the tube web material,
traverse-sealing and cutting the tube web material,
folding a primary container obtained by the cutting along crease lines,
forming a final shape container with multi-folding of the folded flap onto the container top and,
a container cover of thermoplastic material by injection of fusion thermoplastic material
filled to the gap with the folded flaps and the top face from nozzle of injection molding apparatus and,
having a configuration shape determined by the inner wall of the mold of the injection molding apparatus.

Based on the drawings, embodiments of this invention method of moulding plastic part to a container comprising of flexible web materials, the equipment and the container having a moulded plastic part are described as follows. This invention will not be limited to the embodiments mentioned in the drawings.

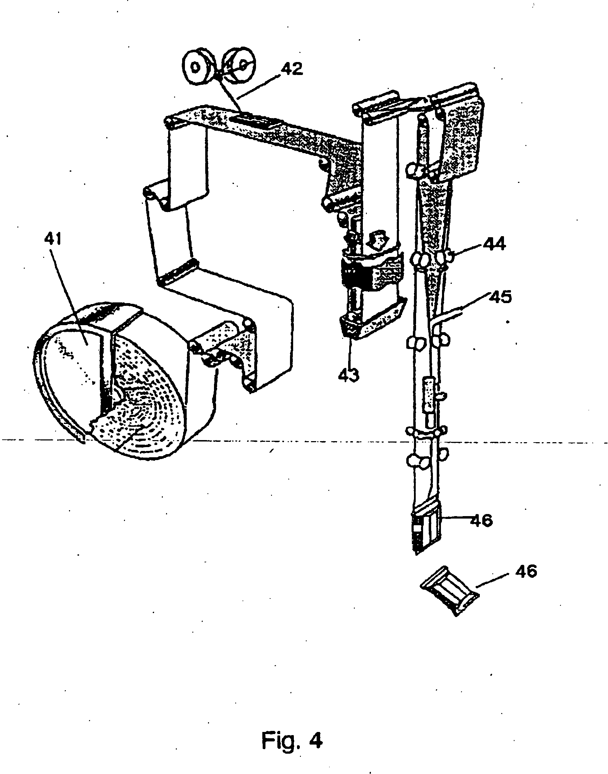

An outline of an example of the packing filler using the method of moulding plastic part to a container comprising of flexible web materials by this invention is shown in Fig. 4.

Flexible packaging material web having the thermoplastic material layer in the innermost layer and having crease lines on the surface is prepared. In filling machine as shown in this example, the flexible packaging material from a rolled flexible packaging material web 41 is transported in the filling machine by rollers. Strip tape 42 is joined-to-one end of the packaging material web with a strip tape applicator.

The packaging material web passes a sterilization agent tank 43, and is sterilized. The sterilization agent is removed with an air knife.

The packaging material web is formed as tube by forming roller 44. The tube is longitudinally sealed by a longitudinal seal element.

Liquid food is filled from a filling pipe 45 in the tube. While moving the tube down by a length equivalent to one container, the tube is sandwiched by seal Jaw of transverse heat seal apparatus and facing Jaw and, the tube is transversally sealed in traverse direction.

A primary pillow shape-shaped container 46 is formed continually simultaneously. A transverse sealing zone of the container is cut. The individual packaging container 46 is separated with knives.

The flaps of the top and bottom of the separated pillow-shaped container 46 are folded along the crease lines. With folding the folded flaps to the container top, a final shaped container is formed.

Layer structure of the example of the flexible web material which can be used in this invention includes a thermoplastic material layer of an outermost layer, a paper layer, a metal layer of oxygen barrier layer and thermoplastic material layer of an innermost layer.

Packaging material in this invention is not limited to the above Examples, and various kinds of packaging materials can be used. For example, the packaging laminate includes low-density polyethylene (LDPE) / printing ink layer / (fibrous) substrate layer-/LDPE/ aluminum foil (Al) /LDPE/LDPE, LDPE/ printing ink layer / paper substrate layer /LDPE/LDPE, printing ink layer /LDPE/ paper substrate layer /LDPE/LDPE, LDPE/ printing ink layer / paper substrate layer /LDPE/AI/ polyester (PET).

In addition, ethylene-alpha-olefin copolymer (so-called metallocene PE) polymerized by using single site catalyst can be used for an innermost layer or/and an outermost layer as well as the above LDPE. Furthermore, as the practical substitute for metal layer (aluminum foil) of the oxygen barrier layer, a vapour deposit layer of inorganic oxide can be used.

Furthermore, in addition to the above paper (fibrous) substrate layer, the plastic substrate kneaded with powder or granular in organics and plastic material can be used.

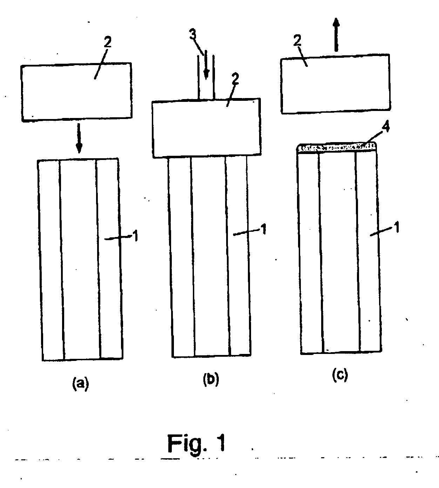

One Example of the mould method in accordance with this invention is shown to Fig. 1. The container 1 is prepared as obtained by forming a flexible web material with crease lines into tube shape, filling contents to the tube web material, traverse sealing and cutting the tube web material, folding a primary container obtained by the cutting along crease lines, forming a final shape container with multi-folding of the folded flap onto the container top, forming a final shape container with multi-folding of the folded flap onto the container top. Subsequently, to a top of the container 1, plastic part 4 is moulded.

The Example includes the following steps:
(1) By applying the mold 2 of the injection molding apparatus having nozzle 3 onto the container top, a cavity is formed between an inner wall of the mold and the top.
(2) At least the fusion thermoplastic material is injected to the inner wall face of the mold and gaps between the folded flap and the top face, by injection of fusion thermoplastic material from the nozzle to the cavity.
(3) The injected thermoplastic material is cooled immediately.
(4) The plastic part is moulded to the top of the container by detaching the mold of the injection molding apparatus from the container top.

Example of plastic part 4 moulded in the Example on the top of container 1 is shown to Fig. 6. The shape of the final container is substantially octagonal prism pillar shape.

In example showing in Fig. 6 (a), an opening device 4a of the container covering entirety the top of container 1 is applied on the container. The opening device 4a consist of a portion raised with manual hand, a portion opening the container in principle of lever, a portion supporting them and covering the top.

In embodiment showing in Fig. 6 (b), cap 4 of the container covering entirely the top of the container 1 is applied to the container. In the cover 4, a hole 4b for straw is formed. The hole is formed so that thickness of melted thermoplastic material is thin. A straw can be inserted in the hole in use.

In embodiment showing in Fig. 1, the side of the container top turns upward, the mold of the injection molding apparatus and the container top are applied.

Fig. 2 shows the section along an A-A line of Fig. 7 illustrating the folded flaps 52 and the top wall 53 of the container 1. As referred to Fig. 2, the embodiment is described.

As shown in Fig. 2 (a), the cavity 5 is formed between the inner wall of the mold and the top by applying the mold 2 of injection molding apparatus having the nozzle 3 to the container 1 top.

The fusion thermoplastic material is injected to the inner wall surface of the mold and gaps between the folded flaps and the top surface, by injection of fusion thermoplastic material from the nozzle 3 to the cavity.

The injected thermoplastic material is cooled immediately.

The plastic part is formed to the top of the container by detaching the mold 2 of the injection molding apparatus from the container top.

The mold consists of plural members 2a, 2b as shown in Fig. 2 (b), but of single member for the mold embodiment (a). By the side mold 2b, application with the container top wall can be done surely.

The part is moulded.

In the embodiment showing in Fig. 2 (c), the mold consists of plural members 2a, 2b.

The cavity between the mold and a container top is sealed by pressure (P) from the side wall of the contents-filled container 1 in the application with the mold 2 of the injection molding apparatus and the container top. By the pressure of the side mold 2b, the container top wall can be applied surely.

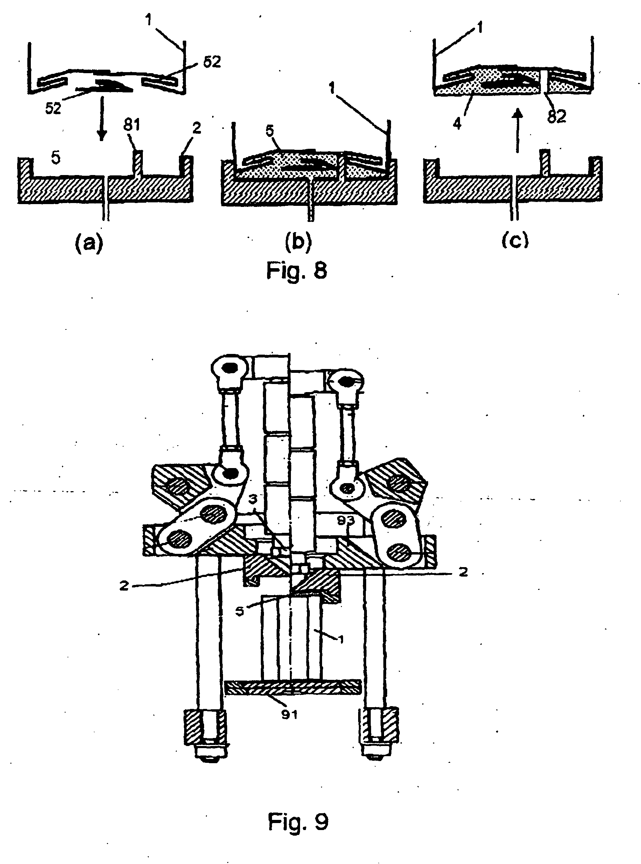

The embodiment applying the mold 2 of injection molding apparatus to the container top at the down-turned top of container 1 is shown in Fig. 8.

As shown in Fig. 8 (a), the upward-turned inner wall of the mold 2 of the injection molding apparatus with the nozzle (as not shown) is arranged. The container top having the folded flaps 52 is applied to. The cavity 5 is formed in the inner wall of the mold and the top.

In this embodiment, as for the mold 2, a supporting member 81 holding down the folded flaps temporarily is arranged in the mold of the injection molding apparatus. The supporting member holds down folded flap 52 temporarily, during injection or after injection, the flap's protrude is controlled. The supporting member 81 of this embodiment may be used to form straw-inserting hole 82 to the plastic part 4.

The fusion thermoplastic material is injected to the inner wall face of the mold and gaps between the folded flap and the top face, by injection of fusion thermoplastic material from the nozzle to the cavity 5. (Fig. 8 (b))

The plastic part is formed to the top of the container by cooling the injected thermoplastic material immediately and, detaching the mold 2 of the injection molding apparatus from the container top. (Fig. 8 (c))

This arrangement can prevent or minimize the leak of the fusion thermoplastic material from cavity 5.

As referring to Fig. 9, the mould apparatus of plastic part to a container comprising of flexible web materials by this invention is described.

Fig. 9 is longitudinal section of one Example of this invention apparatus. The left half of Fig. 9 shows the condition that the mold 2 of the injection molding apparatus goes up. The right half of Fig. 9 shows the condition that the mold 2 of injection molding apparatus goes down and forms cavity 5 with the container top.

The apparatus comprises the transportation means 91 transporting the octagonal pillar shape container 1 having complicated folded flaps to the container top in mould position, the nozzle 3 injecting fusion thermoplastic material, the mold 2 forming the cavity 5 by applying to the container top and having the passage connecting the nozzle outlet with the cavity interior, the cooling means cooling thermoplastic material injected in the cavity of the mold and, the drive means 92 moving the nozzle and the mold for application to the container top and the mold and detach of the mold from the container top.

The mold 2 vertically moving between two positions as shown in Fig. 9 is fixed to the mold support 93. Support working through a toggle joint holds mold 2. Support is driven by hydraulic pressure type apparatus. By the mechanism as shown, the mold 2 can vertically move between two positions.

The container obtained with the above method and the apparatus is the container having the moulded plastic part, which is an octagonal pillar shape container 1 having complicatedly folded flaps to the container top.

The container includes the container cover 4 of thermoplastic material by injection of fusion thermoplastic material. The thermoplastic material is filled to the gap with the folded flaps and the top face from the nozzle of the injection molding apparatus. The cover has a configuration shape determined by the inner wall of the mold of the injection molding apparatus.

Fig. 8 shows one embodiment of a mould method according to this invention and apparatus for the plastic part to the container comprising of flexible web materials. In this embodiment, supporting member holding folded flaps temporarily is arranged in the mold of injection molding apparatus. The supporting member temporarily controls the folded flaps during and after injecting fusion thermoplastic material from nozzle of injection molding apparatus. It is not necessary to fold and completely fix the flaps to the container wall due to the supporting member. The supporting member contributes to efficiency of flap-folding step and reduction of flap-set step.

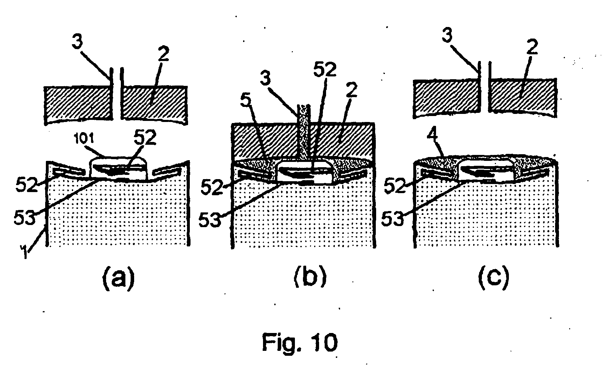

As referred to Fig. 10, further embodiment according to this invention of mould method of plastic part to a container comprising of flexible web materials and apparatus is described. In this embodiment, a support spacer member 101 is arranged to the container top 53 before forming a cavity in the inner wall of the mold and the top due to applying the mold of injection molding apparatus having nozzle to the container top. The support spacer member is a foam body, a hollow body, a compact body which can form a hollow body with, as shown in Fig. 10, applying to the container wall of the container top. In the embodiment, the support spacer member is applied and set to the container top in advance. Use of support spacer member allows to reduce the space of the cavity and to reduce the consumption of injection material. Furthermore, mechanical strength of the plastic part can be reinforced.

As shown in Fig. 10 (a) of the embodiment, the inner wall of the mold 2 of the Injection molding apparatus having the nozzle 3 is turned below. Container top 53 having folded flaps 52 is applied. The cavity 5 is formed in the inner wall of the mold and the top.

In the embodiment, support spacer member subject 101 is applied to container top 53 in advance. (Fig. 10 (a))

The fusion thermoplastic material is injected to the inner wall face of the mold and gaps between the folded flap and the top face, by injection of fusion thermoplastic material from the nozzle to the cavity 5. (Fig. 10 (b))

By cooling of the injected thermoplastic material and detaching the mold 2 of the injection molding apparatus from the container top, the plastic part 4 is moulded in the top of the container. (Fig. 10 (c))

Embodiment of the mould method according to this invention of plastic part to a container comprising-of flexible web material and apparatus is described. In this embodiment, material of the out layer of the flexible web material can be compatible material to improve the adhesive property with injection-moulded thermoplastic material.

### Advantage

As shown from the Examples, the following effect is shown according to the mould method of this invention of plastic part to the container having flexible web material, the apparatus and the container with a moulded plastic-part.
(1) A simple designs and free designs of the container or the plastic parts can be arranged in the container having complicatedly folded flaps to container top wall and having gaps and steps on the container top wall.
(2) For fixing folded flaps onto the container top wall, further manufacturing step of the adhesive or heat-seal, the energy, the material and, the equipment are not needed in the container having complicatedly folded flaps to container top wall and having gaps and steps on the container top wall.
(3) The gaps and steps of the container top can be deleted and, in a distribution stage of containers and products including contents, they will not be contaminated by dust, garbage, dusts, small insects in the container having complicatedly folded flaps to container top wall and having gaps and steps on the container top wall. It is hygienic.

### Industrial applicability

Mould method of plastic part to a container having flexible web materials of this invention, the apparatus and the container having a moulded plastic part are used to pack milk, juice, refined sake, shochu, mineral water and liquid food of other drink.

## Claims

1. A mould method of moulding a plastic part onto a top of a container (1) obtained by:
forming a flexible web material (41) with crease lines into tube shape, filling contents to the tube web material, traverse-sealing and cutting the tube web material, folding a primary container (1) obtained by the cutting along crease lines and, forming a final shape container (1) with multi-folding of the folded
flap (52) onto the container top (53),
**characterized by** including the following steps:
a step of forming a cavity (15) between an inner wall of a mold of an injection molding apparatus having a nozzle (3) and the top by applying the mold (2) of the injection molding apparatus to the container top,
a step of injecting at least the fusion thermoplastic material, to the inner wall face of the mold (2) and gaps between the folded flaps (52) and the top surface, by injection of fusion thermoplastic material from the nozzle (3) to the cavity (5),
a step of cooling the injected thermoplastic material immediately,
a step of forming the plastic part (4) to the top of the container by detaching the mold (2) of the injection molding apparatus from the container top (53).

2. Mould method as defined in claim 1, wherein the shape of the container (1) with the final shape is substantially octagonal prism pillar shape.

3. Mould method as defined in claim 1, wherein the container top (53) is upturned and the mold (2) of the injection molding equipment is applied on the container top (53).

4. Mould method as defined in claim 1, wherein the container top (53) is down-turned and the mold (2) of the injection molding equipment is applied on the container top (53).

5. Mould method as defined in claim 1, wherein the cavity (5) between the mold (2) and the container top (53) is sealed by pressure from the side wall of the contents-filled container (1) in the application with the mold (2) of the injection molding apparatus and the container top (53).

6. Mould method as defined in claim 1, wherein the mold (2) consists of single member.

7. Mould method as defined in claim 1, wherein the mold (2) consists of plural members.

8. Mould apparatus of moulding plastic part (4) to a container (1) comprising of flexible web material comprises;
a transporting means for transporting, to a moulding potion, the container obtained by;
forming the flexible web material with creases lines into tube shape, filling contents to the tube web material, traverse sealing and cutting the tube web material, folding a primary container (1) obtained by the cutting along crease lines, forming a final shape container (1) with multi-folding of the folded flap (52) onto the container top (53),
a nozzle for injecting the fusion thermoplastic material,
a mold for forming a cavity by applying to the container top (53) and having a passage connecting the nozzle (3) outlet with the cavity (5) interior,
a cooling means cooling thermoplastic material injected in the cavity (5) of the mold (2) and,
a drive means for moving the nozzle and the mold (2) for applying to the container top (53) and the mold (2) and detaching of the mold (2) from the container top (53).

9. Mould apparatus as defined in claim 8, wherein an inner wall face of the mold (2) is downwardly arranged and, a top (53) of the container transported upwardly is applied with the mold (2).

10. Mold apparatus as defined in claim 8, wherein an inner wall face of the mold (2) is upwardly arranged and, a top of the container (1) transported downwardly is applied with the mold (2).

11. A container having a moulded plastic part, comprising a container obtained by
forming a flexible web material with crease lines into tube shape,
filling contents to the tube web material,
traverse sealing and cutting the tube web material,
folding a primary container (1) obtained by the cutting along crease lines, forming a final shape container (1) with multi-folding of the folded flap (52) onto the container top(53),
and
a container cover (4) of the thermoplastic material by injection of fusion thermoplastic material with a mould method according to claim 1.

12. Mould method as defined in claim 1, wherein a support member holding down the folded flaps (52) temporarily is arranged in the mold (2) of the injection molding apparatus.

13. Mould method as defined in claim 1, wherein a support spacer member is arranged on the container top (53) before forming the cavity (5) between the inner wall of the mold (2) and the container top (53) by applying the mold (2) to the container top (53).

14. Mould method as defined in claim 1, wherein the moulded thermoplastic material is compatible to the outer surface material of the flexible web material.

## Patentansprüche

1. Ein Anformverfahren zum Anformen eines Kunststoffteils auf eine Oberseite eines Behälters (1), erhalten durch:
Bilden eines flexiblen Bahnmaterials (41) mit Faltlinien in Rohrform, Füllen von Inhalten zu dem Rohrbahnmaterial, Querversiegeln und Schneiden des Rohrbahnmaterials, Falten eines Vorbehälters (1), welcher erhalten wird durch Schneiden entlang der Faltlinien, und Bilden der endgültigen Form eines Behälters (1) durch Mehrfachfalten der gefalteten Lasche (52) auf die Behälteroberseite (53), **dadurch gekennzeichnet, dass** es die folgenden Schritte beinhaltet:
einen Schritt des Bildens eines Hohlraums (15) zwischen einer Innenwand einer Form einer Spritzgussvorrichtung mit einer Düse (3) und der Oberseite durch Aufbringen der Form (2) der Spritzgussvorrichtung auf die Behälteroberseite,
einen Schritt des Einspritzens wenigstens des thermoplastischen Verschmelzungsmaterials auf die Innenwandfläche der Form (2) und Spalten zwischen den gefalteten Laschen (52) und der Oberseitenoberfläche durch Einspritzen des thermoplastischen Verschmelzungsmaterials von der Düse (3) zu dem Hohlraum (5),
einen Schritt des Kühlens des eingespritzten thermoplastischen Materials unmittelbar,
einen Schritt des Bildens des Kunststoffteils (4) an die Oberseite des Behälters durch Lösen der Form (2) der Spritzgussvorrichtung von der Behälteroberseite (53).

2. Anformverfahren, wie es in Anspruch 1 definiert ist, wobei die Form des Behälters (1) mit der endgültigen Form im Wesentlichen die Form einer achteckigen Prismensäule ist.

3. Anformverfahren, wie es in Anspruch 1 definiert ist, wobei die Behälteroberseite (53) nach oben gewandt ist und die Form (2) der Spritzgussausrüstung auf die Behälteroberseite (53) aufgebracht wird.

4. Anformverfahren, wie es in Anspruch 1 definiert ist, wobei die Behälteroberseite (53) nach unten gewandt ist und die Form (2) der Spritzgussausrüstung auf die Behälteroberseite (53) aufgebracht wird.

5. Anformverfahren, wie es in Anspruch 1 definiert ist, wobei der Hohlraum (5) zwischen der Form (2) und der Behälteroberseite (53) mittels Druck versiegelt wird von der Seitenwand des mit Inhalten gefüllten Behälters (1) in der Anwendung mit der Form (2) der Spritzgussvorrichtung und der Behälteroberseite (53).

6. Anformverfahren, wie es in Anspruch 1 definiert ist, wobei die Form (2) aus einem einzelnen Element besteht.

7. Anformverfahren, wie es in Anspruch 1 definiert ist, wobei die Form (2) aus mehreren Elementen besteht.

8. Formvorrichtung zum Anformen eines Kunststoffteils (4) an einen Behälter (1), umfassend ein flexibles Bahnmaterial, welche umfasst:
ein Beförderungsmittel zum Befördern, zu einem Anformabschnitt, den wie folgt erhaltenen Behälter:
Bilden des flexiblen Bahnmaterials mit Faltlinien in Rohrform, Füllen von Inhalten in das Rohrbahnmaterial, Querversiegeln und Schneiden des Rohrbahnmaterials,
Falten eines Vorbehälters (1), welcher durch Schneiden entlang Faltlinien erhalten wird, Bilden der endgültigen Form eines Behälters (1) durch Mehrfachfalten der gefalteten Lasche (52) auf die Behälteroberseite (53),
eine Düse zum Einspritzen des thermoplastischen Verschmelzungsmaterials,
eine Form zum Bilden eines Hohlraums durch Aufbringen auf die Behälteroberseite (53) und mit einem Durchgang, welcher den Ausgang der Düse (3) mit dem Inneren des Hohlraums (5) verbindet,
ein Kühlmittel, welches das in den Hohlraum (5) der Form (2) gespritzte thermoplastische Material abkühlt, und
ein Antriebsmittel zum Bewegen der Düse und der Form (2) zum Aufbringen auf die Behälteroberseite (53) und die Form (2) und Lösen der Form (2) von der Behälteroberseite (53).

9. Anformvorrichtung, wie sie in Anspruch 8 definiert ist, wobei eine Innenwandfläche der Form (2) nach unten angeordnet ist, und eine nach oben beförderte Oberseite (53) des Behälters mit der Form (2) aufgebracht wird.

10. Anformvorrichtung, wie sie in Anspruch 8 definiert ist, wobei eine Innenwandfläche der Form (2) nach oben angeordnet ist, und eine nach unten beförderte Oberseite des Behälters (1) mit der Form (2) aufgebracht wird.

11. Behälter mit einem angeformten Kunststoffteil, umfassend:
einen Behälter, welcher erhalten wird durch
Bilden eines flexiblen Bahnmaterials mit Faltlinien in Rohrform, Füllen von Inhalten zu dem Rohrbahnmaterial,
Querversiegeln und Schneiden des Rohrbahnmaterials,
Falten eines Vorbehälters (1), welcher erhalten wird durch Schneiden entlang der Faltlinien
Bilden der endgültigen Form eines Behälters (1) durch Mehrfachfalten der gefalteten Lasche (52) auf die Behälteroberseite (53), und
eine Behälterabdeckung (4) aus dem thermoplastischen Material durch Einspritzen von thermoplastischem Verschmelzungsmaterial mit einem Anformverfahren nach Anspruch 1.

12. Anformverfahren, wie es in Anspruch 1 definiert ist, wobei ein die gefalteten Laschen (52) nach unten haltendes Stützelement zeitweilig in der Form (2) der Spritzgussvorrichtung angeordnet ist.

13. Anformverfahren, wie es in Anspruch 1 definiert ist, wobei ein Stützenabstandselement an der Behälteroberseite (53) angeordnet wird, ehe der Hohlraum (5) zwischen der Innenwand der Form (2) und der Behälteroberseite (53) durch Aufbringen der Form (2) auf die Behälteroberseite (53) gebildet wird.

14. Anformverfahren, wie es in Anspruch 1 definiert ist, wobei das angeformte thermoplastische Material mit dem Material der Außenoberfläche des flexiblen Bahnmaterials kompatibel ist.

## Revendications

1. Procédé de moulage pour mouler une pièce en matière plastique sur le sommet d'un conteneur (1) obtenu par :
formage d'un matériau en nappe flexible (41) avec des lignes de rainage pour lui donner la forme d'un tube, remplissage d'un contenu dans le matériau en nappe tubulaire, scellement transversal et découpe du matériau en nappe tubulaire, pliage d'un conteneur primaire (1) obtenu par la découpe le long de lignes de rainage, et formage d'un conteneur en forme finale (1) par pliage
multiple du volet replié (52) sur le sommet (53) du conteneur,
**caractérisé en ce qu'**il inclut les étapes suivantes :
une étape consistant à former une cavité (15) entre une paroi intérieure d'un moule d'un appareil de moulage par injection ayant une buse (3) et le sommet en appliquant le moule (2) de l'appareil de moulage par injection sur le sommet du conteneur,
une étape consistant à injecter au moins la matière thermoplastique en fusion, vers la face de paroi intérieure du moule (2) et des intervalles entre les volets repliés (52) et la surface au sommet, en injectant la matière thermoplastique en fusion depuis la buse (3) vers la cavité (5),
une étape consistant à refroidir immédiatement la matière thermoplastique injectée,
une étape consistant à former la pièce en matière plastique (4) sur le sommet du conteneur en détachant le moule (2) de l'appareil de moulage par injection depuis le sommet (53) du conteneur.

2. Procédé de moulage selon la revendication 1, dans lequel la forme du conteneur (1) présentant la forme finale est sensiblement une forme en pilier prismatique octogonal.

3. Procédé de moulage selon la revendication 1, dans lequel le sommet (53) du conteneur est retroussé vers le haut et le moule (2) de l'équipement de moulage par injection est appliqué sur le sommet (53) du conteneur.

4. Procédé de moulage selon la revendication 1, dans lequel le sommet du conteneur (53) est retroussé vers le bas et le moule (2) de l'équipement de moulage par injection est appliqué sur le sommet (53) du conteneur.

5. Procédé de moulage selon la revendication 1, dans lequel la cavité (5) entre le moule (2) et le sommet (53) du conteneur est scellée par une pression depuis la paroi latérale du conteneur (1) rempli d'un contenu, dans l'application avec le moule (2) de l'appareil de moulage par injection et le sommet (53) du conteneur.

6. Procédé de moulage selon la revendication 1, dans lequel le moule (2) est constitué d'un élément unique.

7. Procédé de moulage selon la revendication 1, dans lequel le moule (2) est constitué d'une pluralité d'éléments.

8. Appareil de moulage pour mouler une pièce en matière plastique (4) en donnant un conteneur (1) constitué d'un matériau en nappe flexible, comprenant :
un moyen de transport pour transporter, à une position de moulage, le conteneur obtenu par :
formage du matériau en nappe flexible avec des lignes de rainage pour lui donner la forme d'un tube, remplissage d'un contenu dans le matériau en nappe tubulaire, scellement transversal et découpe du matériau en nappe tubulaire, pliage d'un conteneur primaire (1) obtenu par la découpe le long de lignes de rainage, formage d'un conteneur (1) en forme finale par pliage
multiple du volet replié (52) sur le sommet (53) du conteneur,
une buse pour injecter la matière thermoplastique en fusion,
un moule pour former une cavité en appliquant sur le sommet (53) du conteneur et ayant un passage qui connecte la sortie de la buse (3) avec l'intérieur de la cavité (5),
un moyen de refroidissement qui refroidit la matière thermoplastique injectée dans la cavité (5) du moule (2), et
un moyen d'entraînement pour déplacer la buse et le moule (2) pour l'appliquer sur le sommet (53) du conteneur et le moule (2) et détacher le moule (2) depuis le sommet (53) du conteneur.

9. Appareil de moulage selon la revendication 8, dans lequel une face de paroi intérieure du moule (2) est agencée vers le bas, et un sommet (53) du conteneur transporté vers le haut est appliqué avec le moule (2).

10. Appareil de moulage selon la revendication 8, dans lequel une face de paroi intérieure du moule (2) est agencée vers le haut, et un sommet du conteneur (1) transporté vers le bas est appliqué avec le moule (2).

11. Conteneur ayant une pièce en matière plastique moulée, comprenant un conteneur obtenu par
formage d'un matériau en nappe flexible avec des lignes de rainage pour lui donner la forme d'un tube,
remplissage d'un contenu dans le matériau en nappe tubulaire,
scellement transversal et découpe du matériau en nappe tubulaire,
pliage d'un conteneur primaire (1) obtenu par la découpe le long de lignes de rainage,
formage d'un conteneur (1) en forme finale par pliage multiple du volet replié (52) sur le sommet (53) du conteneur, et
un couvercle de conteneur (4) en matière thermoplastique obtenu par injection de matière thermoplastique en fusion avec un procédé de moulage selon la revendication 1.

12. Procédé de moulage selon la revendication 1, dans lequel un élément de support qui maintient temporairement les volets repliés (52) vers le bas est agencé dans le moule (2) de l'appareil de moulage par injection.

13. Procédé de moulage selon la revendication 1, dans lequel un élément d'écartement de support est agencé sur le sommet (53) du conteneur avant de former la cavité (5) entre la paroi intérieure du moule (2) et le sommet (53) du conteneur en appliquant le moule (2) sur le sommet (53) du conteneur.

14. Procédé de moulage selon la revendication 1, dans lequel la matière thermoplastique moulée est compatible avec le matériau de surface extérieure du matériau en nappe flexible.
